# EUROPEAN PATENT APPLICATION

(11) **EP 2 672 680 A1**
(43) Date of publication of application: **11.12.2013**
(21) Application number: 12846806.3
(22) Date of filing: 27.11.2012
(51) Int. Cl.: H04M 1/03, H04M 9/08

(54) **TELEPHONE TERMINAL AND HANDSET THEREOF**

(30) Priority: 03.05.2012 CN 201210134722
(71) Applicant: Huawei Technologies Co., Ltd., Shenzhen, Guangdong 518129 (CN)
(72) Inventor: DENG, Zhiji, Shenzhen, Guangdong 518129 (CN)
(74) Representative: Goddar, Heinz J.
(86) International application number: PCT/CN2012/085325
(87) International publication number: WO 2013/163873

(57) **Abstract**

Embodiments of the present invention disclose a telephone terminal. The telephone terminal includes: a first handle end, a second handle end, a voice processing unit, and an input-output unit. The voice processing unit receives a first voice signal sent by the first handle end and a second voice signal sent by the second handle end, processes the first voice signal and the second voice signal, and sends the processed voice signal to a communication peer through the input-output unit. According to the embodiments of the present invention, voice signals of the two handle ends are received, processed, and then sent to the communication peer, a problem of failing to send a speech signal of a user to the communication peer when the user holds the handle upside down may be solved, and user experience is improved.

## Description

This application claims priority to Chinese Patent Application No. 201210134722.7, filed with the Chinese Patent Office on May 3, 2012 and entitled "TELEPHONE TERMINAL AND HANDLE OF TELEPHONE TERMINAL ", which is incorporated herein by reference in its entirety.

### FIELD OF THE INVENTION

Embodiments of the present invention relate to the field of communication technologies, and in particular, to a telephone terminal and a handle of the telephone terminal.

### BACKGROUND OF THE INVENTION

A telephone terminal is a very important communication tool, and generally includes a handle and a base, where the base is generally configured to dial a number, receive a voice signal of a communication peer and send the voice signal to the handle, receive a voice signal of the handle and send the voice signal to the communication peer, and so on, and the handle is generally configured to receive the voice signal sent from the base and play the voice signal to a user, receive the voice signal of the user and transmit the voice signal to the base, and so on.

In the prior art, the handle of the telephone terminal fixedly adopts a design structure with one end being a mouthpiece and one end being an earpiece, where the mouthpiece is configured to receive the speech signal of the user using the communication terminal, and the earpiece is configured to play the voice signal of the communication peer received from the base.

Regarding this handle design structure, a fixed use mode must be adopted during use, that is, the earpiece is put close to an ear, and the mouthpiece is put close to a mouth. This fixed use mode is not flexible enough, and easily leads to a problem of failing to send the speech signal to the communication peer when the user holds the handle upside down.

### SUMMARY OF THE INVENTION

Embodiments of the present invention provide a telephone terminal and a handle of the telephone terminal to solve a problem of failing to send a speech signal of a user to a communication peer when the user holds the handle upside down.

In one aspect, a telephone terminal is provided, including: a handle and a base;
the handle has a first handle end and a second handle end;
the telephone terminal has a voice processing unit and an input-output unit;
the first handle end is configured to receive a first voice signal through a built-in microphone, and send the received first voice signal to the voice processing unit;
the second handle end is configured to receive a second voice signal through a built-in microphone, and send the received second voice signal to the voice processing unit; and
the input-output unit is configured to send a processed voice signal to a communication peer.

In another aspect, a handle of a telephone terminal is provided, including: a first handle end, a second handle end, a voice processing unit, and an input-output unit;
the first handle end is configured to receive a first voice signal through a built-in microphone, and send the received first voice signal to the voice processing unit;
the second handle end is configured to receive a second voice signal through a built-in microphone, and send the received second voice signal to the voice processing unit;
the voice processing unit is configured to receive the first voice signal sent by the first handle end and the second voice signal sent by the second handle end, and is further configured to process the first voice signal and the second voice signal, and send the processed voice signal to the input-output unit; and
the input-output unit is configured to send the processed voice signal to a communication peer.

In the embodiments of the present invention, the voice processing unit included in the handle of the telephone terminal or included in the telephone terminal receives the first voice signal sent by the first handle end and the second voice signal sent by the second handle end, processes the first voice signal and the second voice signal, and sends the processed voice signal to the communication peer through the input-output unit. Because the telephone terminal or the handle of the telephone terminal may receive the voice signals of the two handle ends at the same time, and process the voice signals and send the processed voice signal to the communication peer, the problem of failing to send the speech signal of a user to the communication peer when the user holds the handle upside down may be solved, and user experience is improved.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic structural diagram of a device according to an embodiment of the present invention;
FIG. 2 is a schematic functional diagram of echo suppression according to an embodiment of the present invention;
FIG. 3 is a schematic structural diagram of a device according to another embodiment of the present invention; and
FIG. 4 is a schematic structural diagram of a device according to another embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

An embodiment of the present invention provides a telephone terminal.

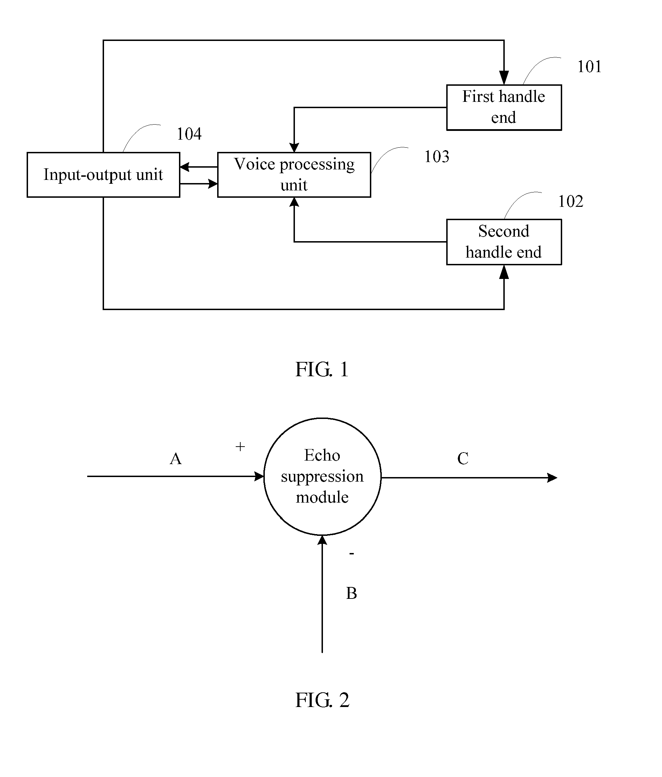

As shown in FIG. 1, the telephone terminal includes a first handle end 101, a second handle end 102, a voice processing unit 103, and an input-output unit 104.

The first handle end 101 is configured to receive a first voice signal, and send the received first voice signal to the voice processing unit.

Specifically, the first voice signal is received through a microphone built in the first handle end.

The first handle end may further be configured to receive and play a peer voice signal sent by the input-output unit, and specifically, the peer voice signal is played through a loudspeaker built in the first handle end, where the peer voice signal is a voice signal sent by a communication peer and received by the input-output unit.

The first voice signal may specifically include a first external voice signal and a first echo signal which are received, where the first echo signal is a reflected wave of the peer voice signal, that is, the voice signal received back by the first handle end after the first handle end plays the received peer voice signal. The first external voice signal may specifically include a speech signal of a user using the telephone terminal and an environmental noise signal.

The second handle end 102 is configured to receive a second voice signal, and send the received second voice signal to the voice processing unit.

Specifically, the second voice signal is received through a microphone built in the second handle end.

The second handle end may further be configured to receive and play the peer voice signal sent by the input-output unit, and specifically, to play the peer voice signal through a loudspeaker built in the first handle end.

The second voice signal may specifically include a second external voice signal and a second echo signal which are received, where the second echo signal is a reflected wave of the peer voice signal, that is, the voice signal received back by the second handle end after the second handle end plays the received peer voice signal.

Because the peer voice signals received by the two handle ends are the same, volume of the echo signals received by the two handle ends is almost the same.

The user may use either handle end as a mouthpiece end, and the other handle end as an earpiece end, and subsequently, a handle end used as the mouthpiece end is briefed as the mouthpiece end, and a handle end used as the earpiece end is briefed as the earpiece end. Because generally, a mouth does not contact the mouthpiece end and an ear directly contacts the earpiece end, it may be considered that the mouthpiece end is in a relatively open space while the earpiece end is in a relatively closed space. In one aspect, because the mouthpiece end is closer to the mouth and is in a relatively open space, a speech signal included in the voice signal received by the mouthpiece end is much louder than a speech signal included in the voice signal received by the earpiece end. In another aspect, because the distance between the two handle ends is short, volume of the environmental noise signals received by the two handle ends is almost the same; although a distance between a noise source position and one of the two handle ends is different from a distance between the noise source position and the other one of the two handle ends and the mouthpiece end is in a relatively open space while the earpiece end is in a relatively closed space, which may cause the volume of the environmental noise signals received by the two handle ends to be somewhat different, the volume of the environmental noise signals is almost the same.

The voice processing unit 103 is configured to receive the first voice signal sent by the first handle end and the second voice signal sent by the second handle end, and is further configured to process the first voice signal and the second voice signal, and send the processed voice signal to the input-output unit.

Specifically, the first voice signal includes the first echo signal, and the second voice signal includes the second echo signal, and preferably, the first voice signal and the second voice signal are processed, so that an echo signal included in the processed voice signal is smaller than the echo signal in the first voice signal or the second voice signal.

The first voice signal and the second voice signal may be processed in the following exemplary implementation modes:

First exemplary implementation mode: A difference between the first voice signal and the second voice signal is calculated, where the difference is the processed voice signal, and preferably, before the difference is calculated, the first voice signal and the second voice signal are adapted to the same signal strength firstly, for example, volume of the first voice signal and volume of the second voice signal are compared, and the smaller voice signal is strengthened to the strength of the louder voice signal, and then the difference between the first voice signal and the second voice signal which are adapted to the same strength is calculated. In one aspect, the difference between the first voice signal and the second voice signal is calculated to offset an overlapping part of the first echo signal and the second echo signal, and only a difference between the first echo signal and the second echo signal is reserved, and because the volume of the echo signals received by the two handle ends is almost the same, the echo signal in the processed voice signal may be much smaller than the echo signal in the first voice signal or the second voice signal. In another aspect, because the speech signal included in the voice signal received by the mouthpiece end is much louder than the speech signal included in the voice signal received by the earpiece end, the processed voice signal may include a most part of the speech signal received by the mouthpiece end. In still another aspect, the difference between the first voice signal and the second voice signal is calculated to offset an overlapping part of the environmental noise signals included in the first voice signal and the second voice signal, and only a difference between the environmental noise signals received by the two handle ends is reserved, and because the volume of the environmental noise signals received by the two handle ends is almost the same, the environmental noise signal in the processed voice signal may be very small. It should be noted that the first exemplary implementation mode may be used to eliminate the same voice signal in the first voice signal and the second voice signal, including the echo signal and/or the noise signal.

Second exemplary implementation mode: The first voice signal and the second voice signal are processed by using the peer voice signal.

Specifically, the voice processing unit receives the peer voice signal from the input-output unit, and processes the first voice signal and the second voice signal by using the received peer voice signal.

Specifically, echo suppression processing is performed for each of the first voice signal and the second voice signal by using the peer voice signal, the processed first voice signal and the processed second voice signal are obtained, then the processed voice signal is generated according to the processed first voice signal and the processed second voice signal. The processed first voice signal generally includes the speech signal and the environmental noise signal received by the first handle end and the processed second voice signal generally includes the speech signal and the environmental noise signal received by the second handle end, where the speech signal included in the processed voice signal corresponding to the mouthpiece end is much louder than the speech signal included in the processed voice signal corresponding to the earpiece end, and the environmental noise signal included in the processed voice signal corresponding to the mouthpiece end is almost the same as the environmental noise signal included in the processed voice signal corresponding to the earpiece end. Based on the above analysis, the exemplary implementation mode of generating the processed voice signal according to the processed first voice signal and the processed second voice signal is as follows: For example, a difference between the processed first voice signal and the processed second voice signal is calculated, and the calculated difference is taken as the processed voice signal. For another example, volume of the processed first voice signal and volume of the processed second voice signal are compared, the louder voice signal may be considered as the voice signal transmitted from the mouthpiece end, and the louder voice signal is taken as the processed voice signal. Preferably, noise processing may also be performed on the louder voice signal to reduce the environmental noise signal included in the voice signal, and the voice signal that has undergone noise processing is taken as the processed voice signal. Preferably, whether each of the processed first voice signal and the processed second voice signal exceeds a preset threshold may also be determined before the comparison, and if neither signal exceeds the preset threshold, it may be determined that neither the first voice signal received by the first handle end nor the second voice signal received by the second handle end includes the voice signal of the user, that is, the current user is not speaking or the terminal is mute, and subsequent steps are not performed.

Specifically, the volume of the first voice signal and the volume of the second voice signal are compared, the louder voice signal may be considered as the voice signal transmitted from the mouthpiece end, echo suppression processing is performed on the louder voice signal by using the peer voice signal, the voice signal that has undergone the echo suppression processing is taken as the processed signal, and preferably, noise processing may also be performed on the louder voice signal to reduce the environmental noise signal included in the voice signal, and the voice signal that has undergone the noise processing is taken as the processed voice signal.

An example of a method of performing echo suppression processing is as follows:

As shown in FIG. 2, FIG. 2 is a simple schematic functional diagram of echo suppression, and may specifically be an echo suppression circuit, like a subtractor, that is, C = A - B. A is the voice signal before the echo suppression processing (such as the first voice signal), and includes an external voice signal C' and an echo signal B', B is the peer voice signal, and C is the voice signal that has undergone the echo suppression processing, such as the processed first voice signal. The echo signal B' included in the voice signal before the echo suppression processing (such as the first echo signal included in the first voice signal) is a reflected wave of the peer voice signal received by the handle end (such as the first handle end), that is, the voice signal received back by the handle end after the received peer voice signal is played. Therefore, B' ≈ B, and C = A - B = C' + B' - B ≈ C', that is, the voice signal obtained after the echo suppression processing is approximately equal to the external voice signal included in the voice signal before the processing, so that an effect of echo suppression is realized.

The input-output unit 104, as described above, is configured to send the processed voice signal to the communication peer, and may further be configured to send the peer voice signal to the first handle end and the second handle end, and may further be configured to send the peer voice signal to the voice processing unit.

Specifically, the telephone terminal includes a handle 100 and a base 200, and the handle and the base communicate via a path between the base and the handle (such as a telephone line or a wireless connection).

The first handle end and the second handle end are two ends of the handle.

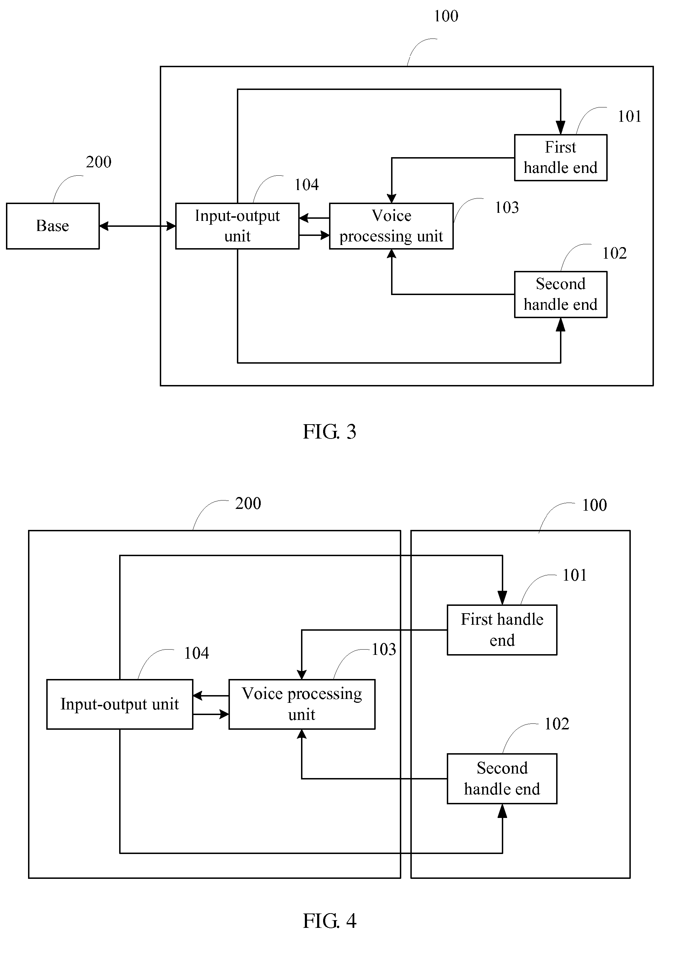

Preferably, as shown in FIG. 3, the voice processing unit and the input-output unit are included in the handle 100, and the input-output unit is specifically configured to send the processed voice signal to the communication peer through the base 200, and is further specifically configured to receive the peer voice signal from the base, and send the peer voice signal to the first handle end, the second handle end, and the voice processing unit.

Optionally, as shown in FIG. 4, the voice processing unit and the input-output unit are included in the base 200, and specifically, the voice processing unit of the base receives the first voice signal and the second voice signal from the handle 100 via the path between the base and the handle; and the base sends the peer voice signal received by the input-output unit to the first handle end and the second handle end via the path between the base and the handle.

The telephone terminal or the handle of the telephone terminal provided in the embodiments of the present invention may receive the voice signals through the two handle ends at the same time, and process the voice signals and send the processed voice signal to the communication peer, so that the problem of failing to send the speech signal of the user to the communication peer when the user holds the handle upside down may be solved; and further, the peer voice signal may be received and played by the two handle ends at the same time, so that a problem of failing to hear the speech signal of the communication peer when the user holds the handle upside down may be solved. Either end of the handle may receive and send the speech signal, that is, either end may be taken as the earpiece end or the mouthpiece end, so that the user may carry out normal communication with the communication peer by using the handle in any gesture without caring about up and down sides of the handle.

Persons of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

In the embodiments provided in the present application, it should be understood that the disclosed apparatus may be implemented in other modes. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The unit described as separate parts may or may not be physically separate, and parts displayed as units may or may not be physical units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

The foregoing description is merely specific embodiments of the present invention, but is not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A telephone terminal, comprising a handle and a base, wherein:
the handle has a first handle end and a second handle end;
the telephone terminal has a voice processing unit and an input-output unit;
the first handle end is configured to receive a first voice signal through a built-in microphone, and send the received first voice signal to the voice processing unit;
the second handle end is configured to receive a second voice signal through a built-in microphone, and send the received second voice signal to the voice processing unit;
the voice processing unit is configured to receive the first voice signal sent by the first handle end and the second voice signal sent by the second handle end, and is further configured to process the first voice signal and the second voice signal, and send the processed voice signal to the input-output unit; and
the input-output unit is configured to send the processed voice signal to a communication peer.

2. The telephone terminal according to claim 1, wherein:
the input-output unit is further configured to send a peer voice signal to the first handle end and the second handle end, wherein the peer voice signal is a voice signal sent by the communication peer and received by the input-output unit; and
the first handle end and the second handle end each are further configured to receive the peer voice signal, and play the peer voice signal through a built-in loudspeaker.

3. The telephone terminal according to claim 1 or 2, wherein:
the first voice signal specifically comprises a first external voice signal and a first echo signal which are received, wherein the first echo signal is a voice signal received back by the first handle end after the peer voice signal received by the first handle end is played;
the second voice signal specifically comprises a second external voice signal and a second echo signal which are received, wherein the second echo signal is a voice signal received back by the second handle end after the peer voice signal received by the second handle end is played; and
the first voice signal and the second voice signal are processed, so that an echo signal comprised in the processed voice signal is smaller than the first echo signal in the first voice signal or the second echo signal in the second voice signal.

4. The telephone terminal according to claim 3, wherein:
the input-output unit is further configured to send the peer voice signal to the voice processing unit; and
the processing the first voice signal and the second voice signal specifically comprises processing the first voice signal and the second voice signal by using the peer voice signal received from the input-output unit.

5. The telephone terminal according to claim 4, wherein:
the processing the first voice signal and the second voice signal by using the peer voice signal received from the input-output unit specifically comprises:
performing echo suppression processing on the first voice signal by using the peer voice signal to obtain the processed first voice signal; performing echo suppression processing on the second voice signal by using the peer voice signal to obtain the processed second voice signal; and generating the processed voice signal according to the processed first voice signal and the processed second voice signal; or
comparing volume of the first voice signal and volume of the second voice signal, performing echo suppression processing on a louder one of the first voice signal and the second voice signal by using the peer voice signal, and taking the voice signal that has undergone the echo suppression processing as the processed signal.

6. The telephone terminal according to claim 5, wherein:
the generating the processed voice signal according to the processed first voice signal and the processed second voice signal specifically comprises:
comparing volume of the processed first voice signal and volume of the processed second voice signal, and taking a louder one of the processed first voice signal and the processed second voice signal as the processed voice signal; or
calculating a difference between the processed first voice signal and the processed second voice signal, and taking the difference as the processed voice signal.

7. The telephone terminal according to any one of claims 1-3, wherein:
the processing the first voice signal and the second voice signal is specifically:
calculating a difference between the first voice signal and the second voice signal, and taking the difference as the processed voice signal.

8. The telephone terminal according to any one of claims 1 to 7, wherein:
both the voice processing unit and the input-output unit are located in the handle; and
the input-output unit is specifically configured to send the processed voice signal to the communication peer through the base.

9. The telephone terminal according to any one of claims 1 to 7, wherein:
both the voice processing unit and the input-output unit are located in the base; and
the receiving the first voice signal sent by the first handle end and the second voice signal sent by the second handle end is specifically: receiving, via a path between the base and the handle, the first voice signal sent by the first handle end and the second voice signal sent by the second handle end.

10. A handle of a telephone terminal, comprising a first handle end, a second handle end, a voice processing unit, and an input-output unit, wherein:
the first handle end is configured to receive a first voice signal through a built-in microphone, and send the received first voice signal to the voice processing unit;
the second handle end is configured to receive a second voice signal through a built-in microphone, and send the received second voice signal to the voice processing unit;
the voice processing unit is configured to receive the first voice signal sent by the first handle end and the second voice signal sent by the second handle end, and is further configured to process the first voice signal and the second voice signal, and send the processed voice signal to the input-output unit; and
the input-output unit is configured to send the processed voice signal to a communication peer.

11. The handle of the telephone terminal according to claim 10, wherein:
the input-output unit is further configured to send a peer voice signal to the first handle end and the second handle end, wherein the peer voice signal is a voice signal sent by the communication peer and received by the input-output unit; and
the first handle end and the second handle end each are further configured to receive the peer voice signal, and play the peer voice signal through a built-in loudspeaker.

12. The handle of the telephone terminal according to claim 10 or 11, wherein:
the first voice signal specifically comprises a first external voice signal and a first echo signal which are received, wherein the first echo signal is a voice signal received back by the first handle end after the peer voice signal received by the first handle end is played;
the second voice signal specifically comprises a second external voice signal and a second echo signal which are received, wherein the second echo signal is a voice signal received back by the second handle end after the peer voice signal received by the second handle end is played; and
the first voice signal and the second voice signal are processed, so that an echo signal comprised in the processed voice signal is smaller than the first echo signal in the first voice signal or the second echo signal in the second voice signal.

13. The handle of the telephone terminal according to claim 12, wherein:
the input-output unit is further configured to send the peer voice signal to the voice processing unit; and
the processing the first voice signal and the second voice signal specifically comprises processing the first voice signal and the second voice signal by using the peer voice signal received from the input-output unit.

14. The handle of the telephone terminal according to claim 13, wherein:
the processing the first voice signal and the second voice signal by using the peer voice signal received from the input-output unit specifically comprises:
performing echo suppression processing on the first voice signal by using the peer voice signal to obtain the processed first voice signal; performing echo suppression processing on the second voice signal by using the peer voice signal to obtain the processed second voice signal; and generating the processed voice signal according to the processed first voice signal and the processed second voice signal; or
comparing volume of the first voice signal and volume of the second voice signal, performing echo suppression processing on a louder one of the first voice signal and the second voice signal by using the peer voice signal, and taking the voice signal that has undergone the echo suppression processing as the processed signal.

15. The handle of the telephone terminal according to claim 14, wherein:
the generating the processed voice signal according to the processed first voice signal and the processed second voice signal specifically comprises:
comparing volume of the processed first voice signal and volume of the processed second voice signal, and taking a louder one of the processed first voice signal and the processed second voice signal as the processed voice signal; or
calculating a difference between the processed first voice signal and the processed second voice signal, and taking the difference as the processed voice signal.

16. The handle of the telephone terminal according to any one of claims 10-12, wherein:
the processing the first voice signal and the second voice signal is specifically:
calculating a difference between the first voice signal and the second voice signal, and taking the difference as the processed voice signal.
